# EUROPEAN PATENT SPECIFICATION

(11) **EP 1 368 283 B1**
(45) Date of publication and mention of the grant of the patent: **22.11.2006**
(21) Application number: 02712144.1
(22) Date of filing: 15.02.2002
(51) Int. Cl.: C04B 28/02, C04B 24/26

(54) **COMPOSITE MATERIAL AND SHAPED ARTICLE WITH THERMAL CONDUCTIVITY AND SPECIFIC GRAVITY ON DEMAND**
VERBUNDMATERIAL UND FORMKÖRPER MIT EINSTELLBARER THERMISCHER LEITFÄHIGKEIT UND SPEZIFISCHER DICHTE
MATERIAU COMPOSITE ET ARTICLE FORME A CONDUCTIVITE THERMIQUE ET A GRAVITE SPECIFIQUE A LA DEMANDE

(30) Priority: 01.03.2001 EP 01104488
(43) Date of publication of application: 10.12.2003
(73) Proprietor: Sika Schweiz AG, 8064 Zürich (CH)
(72) Inventor: BÜRGE, Theodor , A., CH-8954 Geroldswil (CH); SCHIEGG, André, CH-8912 Obfelden (CH); GRISONI, Luca, I-22070 Capiago Intimiano (IT)
(74) Representative: Sika Patent Attorneys
(86) International application number: PCT/IB2002/000464
(87) International publication number: WO 2002/070429

(56) References cited:
- EP-A- 0 314 242
- EP-A- 0 744 387
- WO-A-98/12149
- FR-A- 2 704 853
- US-A- 4 999 056
- DATABASE WPI Section Ch, Week 198647 Derwent Publications Ltd., London, GB; Class E14, AN 1986-308799 XP002178575 & JP 61 227958 A (DENKI KAGAKU KOGYO KK), 11 October 1986 (1986-10-11)
- DATABASE WPI Section Ch, Week 199243 Derwent Publications Ltd., London, GB; Class A93, AN 1992-355843 XP002178576 & SU 1 694 394 A (CONCRETE FERROCONCRETE INST), 30 November 1991 (1991-11-30)
- CHEMICAL ABSTRACTS, vol. 102, no. 4, 28 January 1985 (1985-01-28) Columbus, Ohio, US; abstract no. 30985s, "Self-leveling flooring composition" page 400; XP000184277 & JP 59 146960 A (HOECHST GOSEI) 23 August 1984 (1984-08-23)

## Description

### CROSS REFERENCE TO RELATED APPLICATIONS

This application claims the priority of European application No. 01 104 488.0, filed March 1, 2001, the disclosure of which is incorporated herein by reference in its entirety.

### TECHNICAL FIELD

The present invention relates to a composite material according to claim 1 and shaped articles produced by a self-compacting cementiteous mixture.

### BACKGROUND ART

The properties of materials having a coherent structure comprising fine solid particles or a coherent structure formed from such particles are mostly strongly dependent on the particle size and upon how densely and homogeneously the particles are packed. With increasing density and decreasing particle size, the mechanical strength, the resistance to chemical attacks, the frost resistance, and the hardness increase. The mechanical strength increases with increasing density and with decreasing particle size. However, in the shaping of an article by deformation of a powder mass, the finer the powder is, the more difficult is it to work with a high particle concentration, because surface forces preventing that the particles slide relatively to each other, become the more important, the finer the powder is. This is especially pronounced for aqueous suspensions of Portland cement where the dissolved salts make it difficult to eliminate the surface forces. Therefore, it is normally not easy to arrange Portland cement base materials in water in a dense packing.

For the production of such manufactured parts the practice is known since a rather long time to make use of cement-based conglomerates, in which the inert fillers are at least partly composed of ferrous oxides or similar materials in order to increase the specific gravity of said conglomerates. For instance, the method disclosed in US-A-3 185 255.

EP 0 264 521 describes a heavy concrete filling for a double-walled transport container for radioactive material, which is located in steel flasks in the interior of the transport container. The heavy concrete filling is introduced as radiation-protection material into the cavity of the double wall. The heavy concrete has a compressive strength according to DIN 1048 after 28 days of between 40 to 60 N/mm², the dry apparent density of the concrete is at least 3500 kg/m³, the water/cement ratio is 0.40 to 0.60, and the flow table spread for the fresh concrete is 40 to 48 cm according to DIN 1045. Barite and hematite are used as the heavy aggregates.

EP 0 696 559 describes a concrete slab designed for the construction of a billiard table, said slab being produced with a cement mix comprising, as a special hydraulic binder, a mixture of Portland cement, aluminous cement and anti-shrink additive, a fine sand aggregate from 0 to 8 mm, a selected gravel aggregate from 8 to 20 mm, and a filler of long fibers of synthetic material; said concrete slab also comprises a metal reinforcement and, furthermore, a filler of material having a high specific weight, sufficient to bring the relative specific weight of the whole slab to a value exceeding 2.6. The filler of material with high specific weight consists of basaltic gravel and/or barite.

EP 0 475 831 describes an anti-radiation heavy concrete, particular for use in the manufacture of radioactive waste containers. The concrete according to the invention contains (per 1 m³):
250 to 400 kg of cement
120 to 140 kg of water
1000 to 1300 kg of 0/1 mm hematite
900 to 1000 kg of 0/5 mm hematite
1700 to 1800 kg of 8/25 mm hematite,
and, if appropriate, adjuvants up to 2% by weight of the cement, the relative density of this concrete being higher than 4.

DE 3 906 061 describes a heavy concrete by mixing metal aggregate, hematite and cement, polymer binder and water and casting the mixture under vibration into moulds.

More recently, the European patent application EP-A-0 623 436 disclosed in this connection the use of a plastic shell, reinforced by appropriate metal inserts, and a particularly fluid cement conglomerate comprising metal chips as heavy inert fillers, and undefined accelerating and/or binding additives. This method calls for the shell to be kept under continuous vibratory conditions in order to cause the conglomerate to become duly compacted before it starts to solidify and then harden. The need for the shell to be kept vibrating during the process introduces a considerable complication in this method.

Still more recently, the European patent application EP-A-0 812 946 disclosed a method calling for the ferrous inert materials (rolling scales and the like) to be mixed with water. Owing to the shell requiring again to be kept in a continuous vibratory state in order to enable the conglomerate to become compacted, this method practically does not harden due to lack of a cementiteous binder.

It therefore is a main purpose of the present invention to provide a material and method for producing cured composite materials and shaped articles whereby said method needs no vibration.

### DISCLOSURE OF INVENTION

One of the main aspects of the present invention is to improve cement based materials that are free flowing and self compacting despite of differing specific gravities of their components, and that lead to dense or homogeneous packing in the formed articles. Such material is obtained by adding ultra fine particles and large amounts of superplasticizers. For use in the manufacturing of cured articles, said material contains water, usually in an amount such that the material is free flowing and self-compacting when filled into a mould or shell. The formed articles according to the invention may be shaped from a mass with low viscous consistency simply by gravity without any mechanical compaction, segregation and bleeding.

Hence, the invention is based upon the discovery of the possibility of obtaining, in particular in a "gentle" way in contrast to the known art of compaction by vibration techniques of cementiteous systems, dense structures, and this opens up a wide range of novel products and processes within not only the cement field, but also many other related or unrelated fields such as ceramics, powder metallurgy and replacements for casted metal parts.

The compositions of the present invention make it possible to prepare high quality products of much more complicated shape and larger size than hitherto, and they make it possible to obtain anchoring of components, especially reinforcing bodies of any kind which could not satisfactorily be introduced in corresponding high quality matrices prepared in the traditional manner. This aspect of the invention also opens up the possibility of new and more advantageous production techniques for known articles.

The only possible method of obtaining dense structures hitherto known is compaction by vibration techniques of cementiteous systems.

For certain applications of a shaped article made out of the inventive cementiteous material the thermal conductivity plays an important role. Thus, in one aspect of the present invention, cementiteous articles can also be defined by referring to the thermal conductivity of their matrix in comparison with conventional cementiteous materials. By the use of lightweight aggregate such as fillite, or heavy aggregates such as metallic or metal oxide based aggregates the thermal conductivity can be adapted to the specific applications. As aggregate e.g. the following are used waste ferrous materials from steel mills, iron, copper, barite, magnetite (Fe₃O₄), hematite (Fe₂O₃), limonite, bauxite, aluminum oxide, silicone carbide, and mixtures thereof. In the scope of the present invention, aggregates usually have a specific gravity that differs from the specific gravity of the cementiteous binder (usually about 3.0 to 3.5 kg/l) for at least about 12.5 %, often at least about 20%, or even at least about 25 %, whereby such aggregates usually have a specific gravity in the range of 0.5 kg/l to 7.2 kg/l.

Cementiteous mixtures with low viscosity containing heavy weight aggregates and a high amount of superplasticizer show a tendency for segregation, bleeding and introduction of air. Therefore it is often advantageous to add a stabilizer and/or a deairating agent.

In the state of the art production of high quality concrete and mortar using relatively high dosages of superplasticizer, an easily flowable mass having a low water/cement ratio (for example 0.25) is obtained. The mass is poured into moulds where it is compacted under the influence of gravity and optionally also mechanical vibration. However, during this process, the cement and the light or heavy weight aggregate(s) tend to segregate and to bleed due to migration of the mixing water.

By introducing, in accordance with the principles of the present invention, ultra fine particles in the amount of generally 1 to 30 % by weight referred to the total weight of the mixture, for example 1 - 15% of silica fume, between the densely packed cement particles, and using a high dosage of superplasticizer, a drastic delay of the bleeding process is obtained, theoretically corresponding to 100 - 1000 times slower water movement.

In other words, utilizing the above-mentioned principle of the invention of combining high dosage of superplasticizer with ultra fine particles, such as silica fume, it becomes possible in practice to produce superfluidized high quality concrete, mortar and cement paste without bleeding. This is of special interest in connection with the production of shaped articles or prefabricated elements.

Easily flowable superplasticized cementiteous materials containing ultra fine particles, especially silica particles like silica fume, are one aspect of the present invention. They show a much better internal coherence than corresponding superplasticized easily flowable cement materials without ultra fine (silica) particles. This is believed to be due to the fact that local liquid transport, which contributes to separation, is drastically reduced in the materials with the ultra fine (silica) particles.

### MODES FOR CARRYING OUT THE INVENTION

The ultra fine particles used are in particular silica fume (SiO₂) particles formed from vapor phase in connection with the production of silicon metal or silicon alloys in an electric furnace. Other ultra fine SiO₂-containing particles may be used, such as particles prepared by other vapor phase processes such as combusting of silicon tetrachloride with natural gas to form hydrogen chloride and silicon dioxide vapor, or particles prepared as a sol by neutralizing sodium silicate with acid by dialysis, by electrodialysis, or by ion exchange.

Various ultra fine particles of other chemical composition are also contemplated, such as finely ground or dispersed natural clay, fly ash from power plants, ground blast furnace slag, pozzolanes, calcium carbonate, aluminum oxide, barium sulfate, titanium dioxide, and other fine particles, typically particles of the type used in the paint industry. There is, however, a preference for particles formed by growth from a vapor phase or liquid phase in contrast to particles formed by crushing of larger particles, because particles formed by growth from a vapor phase are likely to have a beneficial shape (spherical) in contrast to the irregular shape of crushed particles.

Especially interesting novel composite materials of the invention are cement-based materials containing, as additional bodies fibers, including metal fibers such as steel fibers, plastic fibers, glass fibers, Kevlar fibers, carbon fibers, cellulose fibers, mineral fibers, and mixtures thereof.

Fluidity is essentially a function of the water/cement ratio. Reducing the water content produces a stiffer less fluid mix, the effect being more marked at lower water/cement ratios. In general, the water/binder ratio of an inventive mortar lies between 0.20 and 0.40 for heavy weight concretes. For light weight concretes, the water/binder ratio can be higher, e.g. in the range of 0.6 to 0.9. There are a number of superplasticizers (also termed polymer based water-reducing admixtures) which improve the fluidity for a given water/cement ratio, or alternatively, reduce the water/cement ratio required to obtain a given fluidity. Typically melamine based, naphthalene based or polycarboxylate based super-plasticizers are suitable admixtures.

Suitable dispersing agents for improving the fluidity and thus useful for the purpose of the invention are in particular concrete superplasticizers which in sufficient amount will disperse the system in a low stress field. The concrete superplasticizer type which has been used in the experiments described in the Examples to obtain extremely valuable results in the cementiteous systems is of the type comprising alkali and alkaline earth metal salts, in particular a sodium or calcium salt of a polycarboxylate with a backbone of polyacrylic acid or methacrylic acid and polyglycol side chains. Thus, preferred superplastizisers are selected from the group consisting of alkali or alkaline earth metal salts of a highly condensed naphthalene sulfonic acid/formaldehyde condensate, and/or a sulfonated melamine-formaldehyde condensate and/or a polycarboxylate based on polyacrylic acid- or polymethacrylic acid backbone and polyethylene- and /or polypropylene oxide side chains.

In the cement-based ultra fine particles, preferably silica fume, containing composite materials according to the invention, this type of concrete superplasticizer is used in the high amount of 0.2 to 5% by weight, in particular 1 to 3 % by weight, calculated on the total weight of the cementiteous binder composition, i.e. the total weight of cementiteous binder and ultra fine particles.

Stabilizers or anti-bleed admixtures can be used which produce a thixotropic mix exhibiting virtually no bleeding.

In accordance with a special aspect of the invention, the composite material is packed and shipped as a dry powder, the addition of the water, being done on the job. In this case, the superplasticizer is present as dry powder in the composite material. This type of composite material of the invention offers the advantage that it can be accurately weighed out and mixed by the producer, the end user just adding the prescribed amount of water and performing the remaining mixing in accordance with the prescription. This aspect of the invention can be characterized as a composite material for producing a shaped article, said composite material comprising at least
A) cementiteous binder composition based on cement and ultrafine particles such as pozzolanic material and/or amorphous silicone dioxide
B) inorganic aggregates
C) superplasticizer in powder form, and
D) upon application at the latest: water

The amount of particles B is substantially corresponding to dense packing thereof in the composite material with homogeneously packed particles A in the voids between particles B, and the amount of dispersing agent C is sufficient to impart to the composite material a fluid to plastic consistency with self compacting behavior after mixing with water D.

Further components which are optionally present in the novel composition are accelerators, retarders, shrinkage reducing admixtures, expanding admixtures, stabilizing admixtures, deairating admixtures, homopolymers and/or copolymers, fibers, and mixtures thereof.

The inorganic solid particles (inorganic aggregates) are preferably present in amounts of between about 10 and about 90 % of the total mixture, preferably about 20 to 50 % for light weight concrete, about 50 to 80 % for heavy and about 70 to 90 % for very heavy concrete, and they are preferably selected from the group consisting of expanded polystyrene, expanded clay, perlite, hollow glass bodies, including hollow glass spheres, expanded shale, natural lightweight aggregate, metals, including steel, waste ferrous materials from steel mills, hematite, limonite, magnetite, barite, bauxite, aluminum oxide, silicone carbide and mixtures thereof.

Preferred cementiteous binders are cements according to European Standard EN 197, white cement, high alumina cement, and mixtures thereof, and preferred ultrafine particles are selected from the group consisting of fly ash, slag, silica fume, metakaoline, natural pozzolanic materials, artificial pozzolanic materials, and mixtures thereof, together forming the cementiteous binder composition.

The cementiteous binder composition is preferably present in amounts between about 10 and about 90% by weight of the total mixture, preferably from about 50 to 80 % for light weight concrete, about 12 to 30 % for heavy and about 10 to 20 % for very heavy concrete, whereby the amount of the ultra fine particles is between 1 and 30 % by weight of the total mixture, preferably from about 15 to 25 % for light weight concrete, about 2.5 to 7.5 % for heavy and about 1 to 2.5 % for very heavy concrete.

If the composite material is ready for use, then it usually contains water in an amount of between 15 and 90% calculated by weight of the cementiteous binder composition.

Preferably accelerators are present in amounts in the range of 1 to 10% calculated by weight of the cementiteous binder composition, preferably in the range of 1 to 6 %, and are selected from the group consisting of nitrates, sulfates, aluminates, carbonates, thiocyanates, formiates, sulfoaluminates, basic aluminum salts, alkanolamines, and mixtures thereof.

Retarders are preferably used in amounts such that the composite material - admixed with water - remains liquid and workable for up to 24 hours. The retarders preferably are selected from the group consisting of condensed phosphates, polyphosphates, hexamethaphosphates, phosphonic acid derivatives, salts of hydroxy and/or polyhydroxy carboxylic acids, gluconic acid and glucoheptonic acid as well as partially hydrolized starch and/or carbohydrates.

Preferred stabilizers are selected from the group consisting of polyethylene oxides, welan gum, xanthane gum, methyl-, hydroxiethyl-, hydroxipropyl cellulose, polyvinyl-alcohol and polyacrylates. Stabilizers are usually used in the range of 0.01 to 1% calculated by weight of the cementiteous binder composition, preferably in the range of 0.02 to 0.2 %.

The composite material may furthermore contain a homopolymer and/or copolymer, usually in the range of 2 to 20% calculated by weight of the cementiteous binder composition, preferably in the range of 5 to 15 %, and preferably selected from the group consisting of in water emulsified epoxy resins and polyamine hardeners; in water dispersed homo- and copolymers of vinyl esters, acrylic acid esters, styrene, butadiene, vinylhalogen compounds or spray dryed powders thereof.

Suitable fibers to be optionally present in the composite material are e.g. selected from the group consisting of metal fibers, including steel fibers, mineral fibers, glass fibers, high temperature fibers, carbon fibers, and organic fibers, including plastic fibers, and the fibers are chopped fibers, or continuous fibers or yarns or ropes, or rovings or staple fibers, or fiber nets or webs. Such fibers usually are present in the amount of 0.1 to 10%, preferably 0.2 to 6 % by weight of the total mixture.

Preferred composite materials are retarded mixtures with a prolonged workability time, but said mixtures being rapidly hardenable upon the addition of an accelerator in the amount of 1 to 10 %, preferably 2 to 6 % calculated by weight of the cementiteous binder.

Such compositions are very suitable to make cured composite materials and shaped articles with thermal conductivity and specific gravity on demand such as in situ cast void fillings, duct fillings, crack fillings, corrosion protecting covers applied on steel and concrete members, pipes, tubes, thermal insulating members, thermal conductive members, nuclear shieldings, containers, structures for deep water applications, load-bearing members in structural engineering, pressing tools for metal parts, forms for injection moulding, counterweights for rotating machine parts, washing machines, cranes, conveyor systems, abrasive resistant wall fillings in safes, vibration dampening in buildings, anchor blocks, foundations and caisson balasting.

Cured composite material and shaped articles can be produced in that e.g. an accelerator is added to the mixture which contains the cementiteous binder composition, superplastiziser and optionally further additives either in the mixing device or after the mixing procedure in the conveyer line or pipeline, and then cured, whereby the mixing is done by ring nozzles or spray nozzles or venturi-tubes and/or by a static mixer which is equipped with one or more dosing units. Curing can be performed or accelerated, respectively, by heat, steam, electric induction or microwaves. A specific method for the production of shaped articles that can also comprise the above described steps is characterized by the following sequence of steps:
a) moulding a shell of preferably plastic material, e.g. by injection or blow moulding,
b) preparing the composite material defined above,
c) filling said composite material into the shell without any vibration,
d) hardening said composite material,
whereby in said moulding step a) the shell is formed to the same shape and the same dimensions as the finished manufactured part, and the step c) of filling the mixture into said shell is performed in a volumetrically metered quantity that is equal to the internal volume of the shell.

The following examples are illustrating the invention. The mortar tests were carried out according to European Standard EN-196-1. Storage of specimens was at 23°C and 50% relative humidity.

### EXAMPLE 1 Light weight

| | | | |
|---|---|---|---|
| Composition | Special Cement | | 36 % |
| | Fly Ash | | 18 % |
| | Fillite | | 37.6 % |
| | Naphtalene Superplasticizer | | 0.35 % |
| | Organic Fibers | | 0.05 % |
| | Acrylic Polymer powder | | 8 % |
| Water/Binder ratio | | | 0.85 |
| Flowability | | 5' | 350 mm |
| (on Glass plate) | | 30' | 350 mm |
| | | 60' | 320 mm |
| Compressive Strength | | 1 d | 2.2 MPa |
| | | 7 d | 5.9 MPa |
| | | 28 d | 11.9 MPa |
| Specific Gravity | | | 0.846 kg/l |
| Thermal Conductivity λ, | | | 0.24 W/(m·K) |

### EXAMPLE 2 Normal weight (State of the Art)

| | | |
|---|---|---|
| Composition | Cement | 33 % |
| | Acrylic Polymer powder | 3 % |
| | Accelerator | 2 % |
| | Antifoamer | 0.2 % |
| | Melamine Superplasticizer | 0.3 % |
| | Filler | 1.3 % |
| | Quartz 0 - 3 mm | 60.2% |
| Water/Binder ratio | | 0.38 |
| Flowability | 5' | 295 mm |
| (on Glass plate) | 30' | 275 mm |
| Compressive Strength | 1 d | 26.2 MPa |
| | 7 d | 53.5 MPa |
| | 28 d | 63.4 MPa |
| Specific Gravity | | 2.245 kg/l |
| Thermal Conductivity λ | | 2.08 W/(m·K) |

### EXAMPLE 3 Heavy weight

| | | |
|---|---|---|
| Composition | Cement | 15 % |
| | Metallic Spheres | 23.8 % |
| | Ferrous Slag | 55.7 % |
| | Silica fume | 5 % |
| | Polycarboxylate Superplasticizer | 0.5 % |
| Water/Binder ratio | | 0.275 |
| Flowability | 5' | 300 mm |
| (on Glass plate) | 30' | 270 mm |
| Compressive Strength | 2 d | 24.9 MPa |
| | 7 d | 62.4 MPa |
| | 28 d | 73.1 MPa |
| Specific Gravity | | 3.525 kg/l |
| Thermal Conductivity λ | | 1.73 W/(m·K) |

### EXAMPLE 4 Heavy weight

| | | |
|---|---|---|
| Composition | Cement | 15 % |
| | Metallic Spheres | 79.25 % |
| | Silica fume | 5 % |
| | Polycarboxylate Superplasticizer | 0.5 % |
| Antibleeding Agent | | 0.25 % |
| Water/Binder ratio | | 0.275 |
| Flowability | 5' | 310mm |
| (on Glass plate) | 30' | 290mm |
| Compressive Strength | 2 d | 22.8MPa |
| | 7 d | 65.4MPa |
| | 28 d | 75.9MPa |
| Specific Gravity | | 3.676 kg/l |
| Thermal Conductivity λ | | 3.00 W/(m·K) |

### EXAMPLE 5 Heavy weight

| | | | |
|---|---|---|---|
| Composition | Cement | | 15 % |
| | Magnetite Aggregates | | 79.6 % |
| | Silica fume | | 5 % |
| | Polycarboxylate Superplasticizer | | 0.4 % |
| Water/Binder ratio | | | 0.25 |
| Flowability | | 5' | 292 mm |
| (on Glass plate) | | 30' | 267 mm |
| Compressive Strength | | 1 d | 3.3 MPa |
| | | 7 d | 52.7 MPa |
| | | 14 d | 66.3 MPa |
| | | 28 d | 76.4 MPa |
| Specific Gravity | | | 3.485 kg/l |
| Thermal Conductivity λ | | | 1.93W/(m·K) |

### EXAMPLE 6 Heavy weight (accelerated)

| | | | |
|---|---|---|---|
| Composition | Cement | | 15 % |
| | Magnetite Aggregates | | 77.9 % |
| | Nitrate based Accelerator | | 1.5 % |
| | Silica fume | | 5 % |
| | Polycarboxylate Superplasticizer | | 0.6 % |
| Water/Binder ratio | | | 0.25 |
| Flowability | | 5' | 285 mm |
| (on Glass plate) | | 30' | 263 mm |
| Compressive Strength | | 1 d | 26.6 MPa |
| | | 7 d | 58.1 MPa |
| | | 28 d | 72.8 MPa |
| Specific Gravity | | | 3.444 kg/l |
| Thermal Conductivity λ | | | 1.96 W/(m·K) |

### EXAMPLE 7 Heavy weight (accelerated)

| | | | |
|---|---|---|---|
| Composition | | | |
| | Cement | | 14 % |
| | Magnetite Aggregates | | 78.4 % |
| | Calciumsulfoaluminate based Accelerator | | 2 % |
| | Silica fume | | 5 % |
| | Polycarboxylate Superplasticizer | | 0.6 % |
| Water Binder ratio | | | 0.25 |
| Flowability | | 5' | 288 mm |
| (on Glass plate) | | 30' | 278 mm |
| Compressive Strength | | 12 hours | 5.4 MPa |
| | | 1 d | 26.5 MPa |
| | | 7 d | 56.5 MPa |
| | | 28 d | 69.7 MPa |
| Specific Gravity | | | 3.505 kg/l |
| Thermal Conductivity λ | | | 1.86 W/(m·K) |

### EXAMPLE 8 Heavy weight (accelerated, rapid hardening)

| | | | |
|---|---|---|---|
| Composition | Cement | | 21 % |
| | Magnetite Aggregates | | 67.4 % |
| | Alkalialuminate based Accelerator | | 6 % |
| | Silica fume | | 5 % |
| | Polycarboxylate Superplasticizer | | 0.6 % |
| Water/Binder ratio | | | 0.38 |
| Flowability | | 3' | 280 mm |
| (on Glass plate) | | 15' | 100 mm |
| Compressive Strength | | 1 hour | 2.1 MPa |
| | | 2 hours | 2.4 MPa |
| | | 4 hours | 4.2 MPa |
| | | 24 hours | 42.9 MPa |
| | | 5 days | 49.4 MPa |
| | | 28 days | 62.7 MPa |
| Specific Gravity Thermal Conductivity λ | | | 3.224 kg/l |
| | | | 1.96 W/(m·K) |

### EXAMPLE 9 Very Heavy weight

| | | | |
|---|---|---|---|
| Composition | Cement | | 12.15 % |
| | Copper Aggregates | | 85.85 % |
| | Silica fume | | 1.25 % |
| | Polycarboxylate Superplasticizer | | 0.5 % |
| | Antibleeding Agent | | 0.25 % |
| Water/Binder ratio | | | 0.32 |
| Flowability | | 5' | 308 mm |
| (on Glass plate) | | 30' | 287 mm |
| Compressive Strength | | 2 d | 22.3 MPa |
| | | 7 d | 45.2 MPa |
| | | 28 d | 54.7 MPa |
| Specific Gravity | | | 5.560 kg/l |
| Thermal Conductivity λ | | | 5.20 W/(m·K) |

Hence, it will be understood that the present invention covers a wide range of potential fields of utility, from the case where incorporation of a relatively small amount of superfine particles and a sufficient amount of a dispersing agent results in a dramatic improvement of an existing technology with obtainment of the advantages stated above in connection with the explanation of the homogeneous distribution of the ultra fine particles, to result in completely novel types of materials having unique properties.

Other possibilities of utilizing the extraordinary shapeability properties of the self compacting mixtures are to shape articles by cold casting by injection or simple hand application. Centrifugal casting technique is another attractive shaping method useful in connection with the process of the invention.

While there are shown and described presently preferred embodiments of the invention, it is to be distinctly understood that the invention is not limited thereto but may be otherwise variously embodied and practised within the scope of the following claims.

## Claims

1. A composite material with thermal conductivity and specific gravity on demand comprising
- inorganic aggregates of a specific gravity different from the specific gravity of the cementiteous binder for at least 25 % and within the range of 0.02 kg/l to 7.2 kg/l
- ultra fine particles
- cementiteous binder, and
- superplasticizer, and whereby the material
- if mixed with water - is free flowing and self compacting when filled into a mould or shell, and whereby the superplasticizer is used in an amount of 0.2 to 5% by weight, calculated on the total weight of cementitious binder and ultrafine particles and whereby the water/binder ratio lies between 0.20 and 0.40 for heavy weight concretes or in the range of 0.6 to 0.9 for light weight concretes.

2. The composite material of claim 1 further comprising water such that the material is free flowing and self compacting when filled into a mould or shell.

3. The composite material of claim 1 or 2 comprising at least one further component selected from the group consisting of accelerators, retarders, shrinkage reducing admixtures, expanding admixtures, stabilizing admixtures, homopolymers and/or copolymers, fibers, and mixtures thereof.

4. The composite material of one of the preceding claims in which the inorganic aggregates are selected from the group consisting of expanded clay, perlite, hollow glass bodies, including hollow glass spheres, expanded shale, natural lightweight aggregate, metals, including steel, waste ferrous materials from steel mills, hematite, limonite, magnetite, barite, bauxite, aluminum oxide, silicone carbide and mixtures thereof.

5. The composite material of one of the preceding claims in which the amount of inorganic aggregates is between about 10 and about 90 % of the total mixture, preferably about 20 to 50 % for light weight concrete, about 50 to 80 % for heavy and about 70 to 90 % for very heavy concrete.

6. The composite material of one of the preceding claims in which the cementiteous binder is a cement according to European Standard EN 197, white cement, high alumina cement, and mixtures thereof.

7. The composite material of one of the preceding claims wherein the ultrafine particles are selected from the group consisting of fly ash, slag, silica fume, metakaoline, natural pozzolanic materials, artificial pozzolanic materials, and mixtures thereof.

8. The composite material of claim 7, wherein the ultrafine particles are silica fume.

9. The composite material of one of the preceding claims in which the amount of the cementiteous binder composition consisting of cementiteous binder and ultra fine particles is between about 10 and about 90% of the total mixture, preferably from about 50 to 80 % for light weight concrete, about 12 to 30 % for heavy and about 10 to 20 % for very heavy concrete.

10. The composite material of one of the preceding claims in which the amount of the ultra fine particles is between 1 and 30 % by weight of the total mixture, preferably from about 15 to 25 % for light weight concrete, about 2.5 to 7.5 % for heavy and about 1 to 2.5 % for very heavy concrete.

11. The composite material of one of the preceding claims in which the concrete superplasticizer is an alkali or alkaline earth metal salt of a highly condensed naphthalene sulfonic acid/formaldehyde condensate, and/or a sulfonated melamine-formaldehyde condensate and/or a polycarboxylate based on polyacrylic acid- or polymethacrylic acid backbone and polyethylene- and /or polypropylene oxide side chains.

12. The composite material of one of the preceding claims in which the amount of the superplasticizer dry matter is in the range of 1 - 3%, calculated on the total weight of cementitious binder and ultrafine particles.

13. The composite material of one of claims 3 to 12 comprising an accelerator, said accelerator being selected from the group consisting of nitrates, sulfates, aluminates, formiates, carbonates, thiocyanates, sulfoaluminates, basic aluminum salts, alkanolamines, and mixtures thereof.

14. The composite material of one of claims 3 to 13 in which the amount of the accelerator is in the range of 1 to 10% calculated by weight of the cementiteous binder composition, preferably in the range of 1 to 6 %.

15. The composite material of one of claims 3 to 14 that comprises a set retarder, said the set retarder being selected from the group consisting of condensed phosphates, polyphosphates, hexamethaphosphates, phosphonic acid derivatives, salts of hydroxy and/or polyhydroxy carboxylic acids, gluconic acid and glucoheptonic acid as well as partially hydrolized starch and/or carbohydrates.

16. The composite material of one of claims 3 to 15 comprising the set retarder in such an amount that - admixed with water - the mixture remains liquid and workable for up to 24 hours.

17. The composite material of one of claims 3 to 16 comprising a stabilizer, said stabilizer being selected from the group consisting of polyethylene oxides, welan gum, xanthane gum, methyl-, hydroxiethyl-, hydroxipropyl cellulose, polyvinyl-alcohol and polyacrylates.

18. The composite material of one of claims 3 to 17 in which the amount of the stabilizer is in the range of 0.01 to 1% calculated by weight of the cementiteous binder composition, preferably in the range of 0.02 to 0.2 %.

19. The composite material of one of claims 3 to 18 comprising a homopolymer and/or copolymer selected from the group consisting of in water emulsified epoxy resins and polyamine hardeners; in water dispersed homo- and copolymers of vinyl esters, acrylic acid esters, styrene, butadiene, vinylhalogen compounds.

20. The composite material of one of claims 3 to 19 comprising said homopolymer and/or copolymer in the range of 2 to 20% calculated by weight of the cementiteous binder composition, preferably in the range of 5 to 15 %.

21. The composite material of one of claims 3 to 20 comprising fibers selected from the group consisting of metal fibers, including steel fibers, mineral fibers, glass fibers, high temperature fibers, carbon fibers, and organic fibers, including plastic fibers, and the fibers are chopped fibers, or continuous fibers or yarns or ropes, or rovings or staple fibers, or fiber nets or webs.

22. The composite material of one of claims 3 to 21 in which the amount of the fibers is in the range of 0.1 to 10%, preferably 0.2 to 6 % by weight of the total mixture.

23. The composite material of one of the preceding claims which is a retarded mixture with a prolonged workability time, but said mixture being rapidly hardenable upon the addition of an accelerator in the amount of 1 to 10%, preferably 2 to 6 % calculated by weight of the cementiteous binder.

24. A cured composite material and shaped article with thermal conductivity and specific gravity on demand comprising a composition as defined in one of the preceding claims.

25. The cured composite material and shaped article of claim 24 that is selected from the group consisting of in situ cast void fillings, duct fillings, crack fillings, corrosion protecting covers applied on steel and concrete members, pipes, tubes, thermal insulating members, thermal conductive members, nuclear shieldings, containers, structures for deep water applications, load-bearing members in structural engineering, pressing tools for metal parts, forms for injection moulding, counterweights for rotating machine parts, washing machines, cranes, conveyor systems, abrasive resistant wall fillings in safes, vibration dampening in buildings, anchor blocks, foundations and caisson balasting.

26. Method for the production of a shaped article of claim 24 or 25 comprising the steps of
a) moulding a shell of plastic material, e.g. by injection or blow moulding
b) preparing the composite material defined in one of claims 2 to 23
c) filling the composite material into the shell without any vibration
d) hardening the composite material,
whereby in said moulding step a) the shell is formed to the same shape and the same dimensions as the finished manufactured part, and the step c) of filling the mixture into said shell is performed in a volumetrically metered quantity that is equal to the internal volume of the shell.

## Patentansprüche

1. Verbundmaterial mit einstellbarer thermischer Leitfähigkeit und spezifischer Dichte, umfassend
- anorganische Aggregate mit einer spezifischen Dichte, die sich von der spezifischen Dichte des Zementitbindemittels um mindestens 25 % und innerhalb des Bereichs von 0,02 kg/l bis 7,2 kg/l unterscheidet
- ultrafeine Teilchen,
- Zementitbindemittel und
- Superweichmacher, und wobei das Material - falls mit Wasser gemischt - beim Füllen in eine Form oder Hülse schüttfähig und selbstverdichtend ist, und wobei der Superweichmacher in einer Menge von 0,2 bis 5 Gew.-%, berechnet auf der Basis des Gesamtgewichts des Zementitbindemittels und der ultrafeinen Teilchen, verwendet wird, und wobei das Wasser/Bindemittel-Verhältnis zwischen 0,20 und 0,40 für Schwerbetone oder im Bereich von 0,6 bis 0,9 für Leichtbetone liegt.

2. Verbundmaterial nach Anspruch 1, ferner umfassend Wasser, so dass das Material beim Füllen in eine Form oder Hülse schüttfähig und selbstverdichtend ist.

3. Verbundmaterial nach Anspruch 1 oder 2, umfassend mindestens eine weitere Komponente ausgewählt aus der Gruppe bestehend aus Beschleunigern, Verzögerern, die Schrumpfung reduzierenden Beimischungen, Streckbeimischungen, stabilisierenden Beimischungen, Homopolymeren und/oder Copolymeren, Fasern und Gemischen davon.

4. Verbundmaterial nach einem der vorangehenden Ansprüche, wobei die anorganischen Aggregate ausgewählt sind aus der Gruppe bestehend aus Blähton, Perlit, hohlen Glaskörpern, einschließlich hohlen Glaskugeln, Blähschiefer, natürlichem Leichtaggregat, Metallen, einschließlich Stahl, Gebrauchteisenmaterialien aus Stahlwerken, Hematit, Limonit, Magnetit, Barit, Bauxit, Aluminiumoxid, Siliciumcarbid und Gemischen davon.

5. Verbundmaterial nach einem der vorangehenden Ansprüche, wobei die Menge an anorganischen Aggregaten zwischen etwa 10 und etwa 90 % des Gesamtgemischs, vorzugsweise etwa 20 bis 50 % für Leichtbeton, etwa 50 bis 80 % für Schwerbeton und etwa 70 bis 90 % für sehr schweren Beton liegt.

6. Verbundmaterial nach einem der vorangehenden Ansprüche, wobei das Zementitbindemittel ein Zement nach dem Europäischen Standard EN 197, weißer Zement, Zement mit hohem Aluminiumanteil und Gemische davon ist.

7. Verbundmaterial nach einem der vorangehenden Ansprüche, wobei die ultrafeinen Teilchen ausgewählt sind aus der Gruppe bestehend aus Flugasche, Schlacke, Quarzstaub, Metakaolin, natürlichen Pozzolanmaterialien, künstlichen Pozzolanmaterialien und Gemischen davon

8. Verbundmaterial nach Anspruch 7, wobei die ultrafeinen Teilchen Quarzstaub sind.

9. Verbundmaterial nach einem der vorangehenden Ansprüche, wobei die Menge der Zementitbindemittelzusammensetzung bestehend aus Zementitbindemittel und ultrafeinen Teilchen zwischen etwa 10 und etwa 90 % des Gesamtgemischs, vorzugsweise etwa 50 bis 80 % für Leichtbeton, etwa 12 bis 30 % für Schwerbeton und etwa 10 bis 20 % für sehr schweren Beton liegt.

10. Verbundmaterial nach einem der vorangehenden Ansprüche, wobei die Menge an ultrafeinen Teilchen zwischen 1 und 30 Gew.-% des Gesamtgemischs, vorzugsweise etwa 15 bis 25 % für Leichtbeton, etwa 2,5 bis 7,5 % für Schwerbeton und etwa 1 bis 2,5 % für sehr schweren Beton liegt.

11. Verbundmaterial nach einem der vorangehenden Ansprüche, wobei der Betonsuperweichmacher ein Alkali- oder Erdalkalimetallsalz eines hoch kondensierten Naphthalinsulfonsäure/Formaldehyd-Kondensats und/oder eines sulfonierten Melamin-Formaldehyd-Kondensats und/oder eines Polycarboxylats auf der Basis eines Polyacrylsäure- oder Polymethacrylsäure-Gerüsts und von Polyethylen- und/oder Polypropylenoxidketten ist.

12. Verbundmaterial nach einem der vorangehenden Ansprüche, wobei die Menge des Superweichmachertrockenstoffs im Bereich von 1-3 %, berechnet auf der Basis des Gesamtgewichts an Zementitbindemittel und ultrafeinen Teilchen, liegt.

13. Verbundmaterial nach einem der Ansprüche 3 bis 12, umfassend einen Beschleuniger, wobei der Beschleuniger ausgewählt ist aus der Gruppe bestehend aus Nitraten, Sulfaten, Aluminaten, Formiaten, Carbonaten, Thiocyanaten, Sulfoaluminaten, basischen Aluminiumsalzen, Alkanolaminen und Gemischen davon.

14. Verbundmaterial nach einem der Ansprüche 3 bis 13, wobei die Menge des Beschleunigers im Bereich von 1 bis 10 %, berechnet auf der Basis des Gewichts der Zementitbindemittelzusammensetzung, vorzugsweise im Bereich von 1 bis 6 % liegt.

15. Verbundmaterial nach einem der Ansprüche 3 bis 14, das einen Härtungsverzögerer umfasst, wobei der Härtungsverzögerer ausgewählt ist aus der Gruppe bestehend aus kondensierten Phosphaten, Polyphosphaten, Hexamethaphosphaten, Phosphonsäurederivaten, Salzen von Hydroxy- und/oder Polyhydroxycarbonsäuren, Gluconsäure und Glucoheptonsäure sowie teilweise hydrolysierter Stärke und/oder Kohlehydraten.

16. Verbundmaterial nach einem der Ansprüche 3 bis 15 umfassend den Härtungsverzögerer in einer derartigen Menge, dass - gemischt mit Wasser - das Gemisch für eine Dauer bis zu 24 Stunden flüssig und verarbeitbar bleibt.

17. Verbundmaterial nach einem der Ansprüche 3 bis 16 umfassend einen Stabilisator, wobei der Stabilisator ausgewählt ist aus der Gruppe bestehend aus Polyethylenoxiden, Welangummi, Xanthangummi, Methyl-, Hydroxyethyl-, Hydroxypropylcellulose, Polyvinylalkohol und Polyacrylaten.

18. Verbundmaterial nach einem der Ansprüche 3 bis 17, wobei die Menge des Stabilisators im Bereich von 0,01 bis 1 %, berechnet auf der Basis des Gewichts der Zementitbindemittelzusammensetzung, vorzugsweise im Bereich von 0,02 bis 0,2 % liegt.

19. Verbundmaterial nach einem der Ansprüche 3 bis 18 umfassend ein Homopolymer und/oder Copolymer ausgewählt aus der Gruppe bestehend aus in Wasser emulgierten Epoxyharzen und Polyaminhärtern; in Wasser dispergierten Homo- und Copolymeren von Vinylestern, Acrylsäureestern, Styrol, Butadien, Vinylhalogenverbindungen.

20. Verbundmaterial nach einem der Ansprüche 3 bis 19 umfassend das Homopolymer und/oder Copolymer im Bereich von 2 bis 20 %, berechnet auf der Basis des Gewichts der Zementitbindemittelzusammensetzung, vorzugsweise im Bereich von 5 bis 15 %.

21. Verbundmaterial nach einem der Ansprüche 3 bis 20 umfassend Fasern ausgewählt aus der Gruppe bestehend aus Metallfasern, einschließlich Stahlfasern, Mineralfasern, Glasfasern, Hochtemperaturfasern, Kohlenstofffasern und organischen Fasern, einschließlich Kunststofffasern, und wobei die Fasern Faserschnitzel oder kontinuierliche Fasern oder Garne oder Seile oder Vorgarne oder Stapelfasern oder Fasernetze oder -gewebe sind.

22. Verbundmaterial nach einem der Ansprüche 3 bis 21, wobei die Menge der Fasern im Bereich von 0,1 bis 10 %, vorzugsweise 0,2 bis 6 %, auf der Basis des Gewichts des Gesamtgemischs liegt.

23. Verbundmaterial nach einem der vorangehenden Ansprüche, das ein verzögertes Gemisch mit einer verlängerten Verarbeitungszeit ist, wobei jedoch das Gemisch durch die Zugabe eines Beschleunigers in der Menge von 1 bis 10 %, vorzugsweise 2 bis 6 %, berechnet auf der Basis des Gewichts des Zementitbindemittels, schnell härtbar ist.

24. Ausgehärtetes Verbundmaterial und Formgegenstand mit einstellbarer thermischer Leitfähigkeit und spezifischer Dichte umfassend eine wie in einem der vorangehenden Ansprüche definierte Zusammensetzung.

25. Ausgehärtetes Verbundmaterial und Formgegenstand nach Anspruch 24, das/der ausgewählt ist aus der Gruppe bestehend aus in situ gebildeten Gusshohlraumfüllungen, Kanalfüllungen, Rissfüllungen, auf Stahl- und Betonelementen aufgebrachten Korrosionsschutzabdeckungen, Leitungen, Schläuchen, wärmeisolierenden Elementen, wärmeleitenden Elementen, Nuklearabschirmungen, Behältern, Strukturen für Tiefwasseranwendungen, lastentragenden Elementen im Strukturbau, Druckwerkzeugen für Metallteile, Formen für den Spritzguss, Gegengewichten für Drehmaschinenteile, Waschmaschinen, Kränen, Fördersystemen, abriebfesten Wandfüllungen in Safes, Vibrationsdämpfungen in Gebäuden, Verankerungsblöcken, Fundamenten und Senkkastenbeschwerungen.

26. Verfahren zur Herstellung eines Formgegenstands nach Anspruch 24 oder 25 umfassend die Schritte:
a) Gießen einer Hülse aus Kunststoffmaterial, z.B. durch Spritzguss oder Blasguss,
b) Herstellen des in einem der Ansprüche 2 bis 23 definierten Verbundmaterials,
c) Füllen des Verbundmaterials in die Hülse ohne jegliche Vibration,
d) Härten des Verbundmaterials,
wobei im Gießschritt a) die Hülse zu derselben Form und denselben Maßen wie das fertige hergestellte Teil geformt wird und der Schritt c) des Füllens des Gemischs in die Hülse in einer volumetrisch abgemessenen Menge, die gleich dem Innenvolumen der Hülse ist, durchgeführt wird.

## Revendications

1. Matériau composite ayant une conductivité thermique et une densité spécifique sur demande, comprenant
- des agrégats inorganiques d'une densité spécifique différente de la densité spécifique de l'agglomérant à base de ciment sur au moins 25% et au sein du domaine allant de 0,02 kg/l à 7,2 kg/l
- des particules ultra fines
- de l'agglomérant à base de ciment et
- un super-plastifiant, et moyennant quoi le matériau - en cas de mélange à de l'eau - est à écoulement facile et auto-compactant en cas de remplissage dans un moule ou dans une coque, le super-plastifiant est utilisé dans une quantité de 0,2 à 5% en poids, calculée sur la base du poids total de l'agglomérant à base de ciment et des particules ultra fines et le rapport eau/agglomérant se situe entre 0,20 et 0,40 pour les bétons lourds ou dans le domaine de 0,6 à 0,9 pour les bétons légers.

2. Matériau composite selon la revendication 1, comprenant en outre de l'eau de telle sorte que le matériau soit à écoulement libre et auto-compactant en cas de remplissage dans un moule ou dans une coque.

3. Matériau composite selon la revendication 1 ou 2, comprenant au moins un autre composant sélectionné parmi le groupe constitué d'agents accélérateurs, d'agents retardateurs, de mélanges de réduction du retrait, de mélanges d'expansion, de mélanges de stabilisation, d'homopolymères et/ou de copolymères, de fibres et de mélanges de ceux-ci.

4. Matériau composite selon l'une des revendications précédentes, dans lequel les agrégats inorganiques sont sélectionnés parmi le groupe constitué d'argile expansée, de perlite, de corps en verre creux, y compris de sphères en verre creuses, de schiste expansé, d'agrégats naturels légers, de métaux, y compris l'acier, de matériaux ferreux de rejet provenant d'usines sidérurgiques, d'hématite, de limonite, de magnétite, de baryte, de bauxite, d'oxyde d'aluminium, de carbure de silicium et de mélanges de ceux-ci.

5. Matériau composite selon l'une des revendications précédentes, dans lequel la quantité d'agrégats inorganiques est comprise entre environ 10 et environ 90% du mélange total, de préférence d'environ 20 à 50% pour le béton léger, d'environ 50 à 80% pour le béton lourd et d'environ 70 à 90% pour le béton très lourd.

6. Matériau composite selon l'une des revendications précédentes, **caractérisé en ce que** l'agglomérant à base de ciment est un ciment conformément à la norme européenne EN 197, un ciment blanc, un ciment à alumine élevée et des mélanges de ceux ci.

7. Matériau composite selon l'une des revendications précédentes, **caractérisé en ce que** les particules ultra fines sont sélectionnées parmi le groupe constitué de cendre légère, de scorie, de fumées de silice, de méta kaolins, de matériaux pouzzolaniques naturels, de matériaux pouzzolaniques synthétiques, et de mélanges de ceux-ci.

8. Matériau composite selon la revendication 7, dans lequel les particules ultra fines sont des fumées de silice.

9. Matériau composite selon l'une des revendications précédentes, dans lequel la quantité de la composition d'agglomérant à base de ciment se composant d'agglomérant à base de ciment et de particules ultra fines est comprise entre environ 10 et environ 90% du mélange total, de préférence d'environ 50 à 80% pour le béton léger, d'environ 12 à 30% pour le béton lourd et d'environ 10 à 20% pour le béton très lourd.

10. Matériau composite selon l'une des revendications précédentes, dans lequel la quantité des particules ultra fines est comprise entre 1 et 30% en poids du mélange total, de préférence d'environ 15 à 25% pour le béton léger, d'environ 2,5 à 7,5% pour le béton lourd et d'environ 1 à 2,5% pour le béton très lourd.

11. Matériau composite selon l'une des revendications précédentes, dans lequel le super-plastifiant de béton est un sel de métal alcalin ou alcalino-terreux d'un condensé hautement condensé acide napthalène-sulfonique/formaldéhyde et/ou d'un condensé mélamine-formaldéhyde sulfoné et/ou d'un polycarboxylate basé sur un squelette d'acide polyacrylique ou d'acide polyméthacrylique et de polyéthylène et/ou des chaînes latérales d'oxyde de polypropylène.

12. Matériau composite selon l'une des revendications précédentes, dans lequel la quantité de matière sèche de super-plastifiant est dans le domaine de 1 à 3 %, calculée sur la base du poids total d'agglomérant à base de ciment et de particules ultra fines.

13. Matériau composite selon l'une des revendications 3 à 12, comprenant un agent accélérateur, ledit agent accélérateur étant sélectionné parmi le groupe constitué des nitrates, des sulfates, des aluminates, des formiates, des carbonates, des thiocyanates, des sulfoaluminates, des sels basiques d'aluminium, des alcanolamines et de mélanges de ceux-ci.

14. Matériau composite selon l'une des revendications 3 à 13, dans lequel la quantité de l'agent accélérateur est dans le domaine de 1 à 10%, calculée sur la base du poids de la composition d'agglomérant à base de ciment, de préférence dans le domaine de 1 à 6%.

15. Matériau composite selon l'une des revendications 3 à 14, qui comprend un agent retardateur de la prise, ledit agent retardateur de la prise étant sélectionné parmi le groupe constitué de phosphates, de polyphosphates, d'hexaméthaphosphates condensés, de dérivés de l'acide phosphonique, de sels d'acides hydroxy et/ou polyhydroxy carboxyliques, d'acide gluconique et d'acide glucoheptonique ainsi que d'amidon et d'hydrates de carbone partiellement hydrolysés.

16. Matériau composite selon l'une des revendications 3 à 15, comprenant l'agent retardateur de la prise dans une quantité telle que - en cas de mélange à de l'eau - le mélange reste à l'état liquide et peut être mis en oeuvre pendant une période allant jusqu'à 24 heures.

17. Matériau composite selon l'une des revendications 3 à 16, comprenant un agent stabilisateur, ledit agent stabilisateur étant sélectionné parmi le groupe constitué d'oxydes de polyéthylène, de gomme de welan, de gomme de xanthane, de méthylcellulose, d'hydroxyéthylcellulose, d'hydroxypropylcellulose, d'alcool polyvinylique et de polyacrylates.

18. Matériau composite selon l'une des revendications 3 à 17, dans lequel la quantité de l'agent stabilisateur est dans le domaine de 0,01 à 1%, calculé sur la base du poids de la composition d'agglomérant à base de ciment, de préférence dans le domaine de 0,02 à 0,2%.

19. Matériau composite selon l'une des revendications 3 à 18, comprenant un homopolymère et/ou un copolymère sélectionné parmi le groupe constitué de résines époxydes émulsifiées dans l'eau et d'agents durcisseurs de polyamine; d'homopolymères et de copolymères dispersés dans l'eau d'esters vinyliques, d'esters de l'acide acrylique, du styrène, du butadiène et de composés vinylhalogéniques.

20. Matériau composite selon l'une des revendications 3 à 19, comprenant ledit homopolymère et/ou copolymère dans le domaine de 2 à 20%, calculé en poids de la composition de l'agglomérant à base de ciment, de préférence dans le domaine de 5 à 15%.

21. Matériau composite selon l'une des revendications 3 à 20, comprenant des fibres sélectionnées parmi le groupe constitué de fibres métalliques, y compris de fibres d'acier, de fibres minérales, de fibres de verre, de fibres hautes températures, de fibres de carbone et de fibres organiques, y compris de fibres plastiques, et les fibres sont des fibres coupées ou des fibres continues ou des fils ou des câbles ou des stratifils ou des fibres courtes ou des filets ou des toiles de fibres.

22. Matériau composite selon l'une des revendications 3 à 21, dans lequel la quantité de fibres est dans le domaine de 0,1 à 10%, de préférence de 0,2 à 6% en poids du mélange total.

23. Matériau composite selon l'une des revendications précédentes qui est un mélange retardé ayant une durée de capacité de mise en oeuvre prolongée, ledit mélange devenant toutefois rapidement durcissable à la suite de l'addition d'un agent accélérateur en une quantité de 1 à 10%, de préférence de 2 à 6%, calculée sur la base du poids de l'agglomérant à base de ciment.

24. Matériau composite durci et article moulé ayant une conductivité thermique et une densité spécifique sur demande, comprenant une composition telle qu'elle est définie dans l'une des revendications précédentes.

25. Matériau composite durci et article moulé selon la revendication 24 qui est sélectionné parmi le groupe constitué de charges pour vide coulées in situ, de remplissages de conduit, de remplissages de fissures, de couvercles de protection contre la corrosion appliqués sur des organes en acier et en béton, des tuyaux, des tubes, des organes d'isolation thermique, des organes thermo conducteurs, des écrans de protection nucléaire, des récipients, des structures pour des applications en eaux profondes, des organes porteurs de charges dans l'ingénierie structurale, des outils de pressage pour des pièces métalliques, des moules pour le moulage par injection, des contrepoids pour des pièces de machines rotatives, des machines à laver, des grues, des systèmes de transport, des charges résistantes abrasives pour parois dans des coffres-forts, l'amortissement des vibrations dans les bâtiments, des blocs d'ancrage, des fondations et le ballastage par caisson.

26. Procédé en vue de la production d'un article moulé selon la revendication 24 ou 25, comprenant les étapes
a) de moulage d'une coque en matériau plastique, par exemple par moulage par soufflage ou par moulage par injection,
b) de préparation du matériau composite défini dans l'une des revendications 2 à 23,
c) de remplissage du matériau composite dans la coque sans aucune vibration quelconque,
d) de durcissement du matériau composite,
étant donné que, dans ladite étape de moulage a), la coque est formée à la même forme et aux mêmes dimensions que la pièce manufacturée finie et que l'étape c) de remplissage du mélange dans ladite coque est effectuée à raison d'une quantité dosée par voie volumétrique qui est égale au volume interne de la coque.
